Europäisches Patentamt

European Patent Office

Office européen des brevets

(19)

(11) Publication number: **0 449 797 A1**

## (12) EUROPEAN PATENT APPLICATION

(21) Application number: 91870052.7

(22) Date of filing: 26.03.91

(51) Int. Cl.[5]: **C01B 15/037, C11D 3/39, D06L 3/02**

(30) Priority: 30.03.90 GB 9007232

(43) Date of publication of application:
02.10.91 Bulletin 91/40

(84) Designated Contracting States:
AT BE CH DE DK ES FR GB GR IT LI LU NL SE

(71) Applicant: MONSANTO EUROPE S.A.
Avenue de Tervuren 270-272 Letter Box 21
B-1150 Brussels (BE)

(72) Inventor: Ledent, Michel
12, Rue des Colonies
B-5003 Saint-Marc (BE)

(74) Representative: Ernst, Hubert et al
Monsanto Services International S.A., Patent
Department, Avenue de Tervuren 270-272,
Letter Box No. 21
B-1150 Brussels (BE)

(54) Method for the preparation and/or maintenance of alkaline bleaching baths and hydrogen peroxide solutions for use therein.

(57) A method for preparing a stabilised alkaline hydrogen peroxide containing bleaching bath is disclosed. Alkalimetal salts of diethylene triaminepentamethylenephosphonic acid (DTPMA) act as stabilising and bleach protecting agents. The DTPMA is added to the bath together with the hydrogen peroxide. Ready-to-use hydrogen peroxide bleaching bath solutions containing from 0,5% to 5% of DTPMA and having a pH within the 4-7 range are also described.

EP 0 449 797 A1

This invention relates to a method for the preparation and/or maintenance of alkaline hydrogen bleaching baths wherein the hydrogen peroxide is protected by the presence of an alkali metal salt of diethylenetriaminepenta (methylenephosphonic acid) (DTPMA) against catalytic decomposition. The invention also relates to concentrated solutions of hydrogen peroxide containing such alkali metal salts and which are especially useful in the method of the invention.

The use of aminomethylenephosphonates, including DTPMA, to stabilise hydrogen peroxide is known. For example, EP-A-0 009 839 discloses alkaline aqueous hydrogen peroxide solutions having a pH in the range 8-14 and a concentration of $H_2O_2$ in the range 5-20% by weight, and containing a stabiliser such as a salt of DTPMA in an amount of from 0.1 to 10% by weight of the hydrogen peroxide in the solution.

EP-A-0 015 818 describes an aqueous solution of hydrogen peroxide, which may contain 30-90% by weight of $H_2O_2$, having DTPMA or its sodium, potassium or ammonium salt present as a stabiliser. The amount of stabiliser may be 5-100 mg per litre of hydrogen peroxide.

The normal procedure for the preparation and maintenance of alkaline peroxide bleaching baths involves the separate injection of hydrogen peroxide solution, stabiliser solution and alkali metal hydroxide into the bath. The presence of the stabiliser is required because non-sequestered heavy metals in the water catalyse the decomposition of the hydrogen peroxide which is then not available for bleaching. The amount of stabiliser required depends on the degree of heavy metal contamination, but frequently at least 100 ppm of stabiliser is required in the bath to avoid the excessive decomposition of the hydrogen peroxide.

According to the present invention, we provide a method for the preparation and/or maintenance of an alkaline bleaching bath, which comprises introducing hydrogen peroxide at a rate to provide and/or maintain the peroxide concentration required for bleaching, an alkali metal salt of DTPMA and an aqueous alkalinity control medium into the bath, characterised in that the hydrogen peroxide and alkali metal salt of DTPMA are introduced as a solution of hydrogen peroxide containing at least 25% by weight of $H_2O_2$ and an alkali metal salt of DTPMA in a concentration such that the half life of hydrogen peroxide in the bath at 90°C and in the absence of textiles, is at least 30 minutes.

The aqueous alkalinity control medium will usually be sodium hydroxide solution, but aqueous solutions containing other alkaline materials, alone or with sodium hydroxide or with each other, can be used, for example potassium hydroxide or alkali metal carbonates, phosphates or citrates.

The advantages of the method of the invention over the conventional procedure in which the hydrogen peroxide and stabiliser solutions are introduced separately, are (i) that the number of injection lines is reduced from three to two, thus saving on equipment costs, and (ii) the possibility, inherent in the conventional procedure, that the hydrogen peroxide could be introduced into the bath without the necessary amount of stabiliser being present, is avoided.

The invention also includes solutions of hydrogen peroxide containing at least 25% by weight $H_2O_2$ and an alkali metal salt of DTPMA, characterised in that the concentration of the said alkali metal salt, expressed as the equivalent amount of DTPMA, is from 0.5 to 5% by weight of the solution, and the solution has a pH within the range 4-7. Such solutions are stable for long periods under normal conditions of storage. Compared with solutions of hydrogen peroxide containing smaller amounts of stabiliser, these solutions have the advantage that the risk of explosion is reduced if water having an unexpectedly high amount of heavy metal contamination is used to dilute a concentrated solution. Such a risk is present especially if the stock peroxide solution has a high concentration of $H_2O_2$, for example during the dilution of 50% $H_2O_2$ to 30% or 25% $H_2O_2$.

A solution of hydrogen peroxide of the invention contains a higher concentration of hydrogen peroxide than those disclosed in EP-A-0 009 839 and a significantly greater concentration of DTPMA alkali metal salt than that disclosed in EP-A-0 015 818. For hydrogen peroxide solutions containing from 25% to 50% by weight of $H_2O_2$, the preferred concentration of DTPMA alkali metal salt is usually within the range 1-2%, expressed as the equivalent amount of DTPMA, by weight of the solution. If a hydrogen peroxide solution of the invention is to be used in the process of the invention, the optimum concentration of DTPMA alkali metal salt will depend on, for example, the concentration of hydrogen peroxide required in the bleaching bath and the degree of contamination of the bath by heavy metals such as iron. The optimum can be arrived at by the person skilled in the art without extensive experimentation.

A solution of hydrogen peroxide of the invention is usually prepared by the addition of a solution of an alkali metal salt of DTPMA to a commercially available concentrated hydrogen peroxide solution. This may already contain one or more stabilisers in small (possibly up to 500 ppm) amounts. The solution of the alkali metal salt of DTPMA will normally be one which is relatively concentrated rather than dilute, so as to avoid undesirable dilution of the hydrogen peroxide. Such solutions may contain, for example, 20-30% by weight of alkali metal salt expressed as the equivalent amount of DTPMA. It is necessary to refer to the equivalent amount of DTPMA because alkali metal salts having different ratios of alkali metal to DTPMA are possible. Preferred alkali metal salts are those in which at least 50% of the replaceable (acidic) hydrogen ions of DTMPA are replaced by alkali metal ions, for example the hexa-, hepta-, and octa-alkali metal salts or mixtures of these salts. The preferred alkali metal ion is sodium.

The addition of a solution of an alkali metal salt in which at least 50% of the hydrogen ions are replaced by alkali metal ions to a commercial concentrated hydrogen peroxide solution will normally provide a solution of the invention having a pH within the range corresponding to optimum stability (4-7) without pH adjustment. However, it is possible to add a solution of an alkali metal salt of DTPMA where fewer than 50% of the hydrogen ions are replaced by alkali metal ions, or even a solution of DTPMA itself, followed by adjustment of the pH using an alkali metal hydroxide to increase the pH of the hydrogen peroxide solution to within the required range.

The effect of DTPMA in its acid and sodium salt forms on the stability of 30% by weight hydrogen peroxide solution was investigated using solutions having the following compositions. The 35% by weight $H_2O_2$ solution was unstabilised.

Formulation A

```
35% by weight H₂O₂ solution                    100 g
DTMPA heptasodium salt solution
containing 25% by weight DTPMA acid
equivalent                                        7 g
Water to a total of                             116 g
```

This formulation contained 1.5% DTPMA acid equivalent and had a pH of 5.0.

Formulation B

```
35% by weight H₂O₂ solution                    100 g
50% by weight solution of DTPMA acid             3.5 g
Water to a total of                            116 g
```

This formulation contained 1.5% DTPMA acid and had a pH of 0.5

Formulation C

```
35% by weight H₂O₂ solution      100 g
Water to a total of              116 g
```

These Formulations were stored at 20-23°C and the residual hydrogen peroxide in the Formulation was measured at intervals using the standard iodometric titration. The results are shown in Table 1 below.

TABLE 1

| | % $H_2O_2$ w/w remaining in the Formulation | | |
| --- | --- | --- | --- |
| TIME | FORMULATION A | FORMULATION B | FORMULATION C |
| 14 days | 29.56 | 27.6 | 29.1 |
| 1 month | 29.8 | 26.7 | 27.6 |
| 2 months | 29.8 | 23.15 | 25.1 |
| 9 months | 29.1 | 1.45 | 12.0 |
| 21 months | 28.0 | 0 | 0 |

These results show the importance of selecting the correct pH for the solution, i.e. using a sodium or other alkali metal salt of DTPMA rather than DTPMA itself. In the relatively strongly acidic Formulation B, DTPMA itself at 1.5% by weight (i.e. a concentration significantly higher than recommended in the prior art) had an adverse effect on the stability of the hydrogen peroxide.

To investigate the stabilisation of a typical textile bleaching bath, various amounts of the heptasodium salt of DTPMA were added to solutions containing (initially) 5.6% by weight of $H_2O_2$, 1 ppm of ferric iron and sodium hydroxide to provide a pH of 11.3.

Solution 1 contained heptasodium salt of DTPMA equivalent to 100 ppm DTPMA, added separately from the $H_2O_2$.

Solution 2 contained heptasodium salt of DTPMA equivalent to 300 ppm DTMPA, added separately from the $H_2O_2$.

Solution 3 was prepared from Formulation A of Table 1 after 21 months of storage.

All solutions were then heated and held at 90°C, and aliquots were removed at intervals for determination of the residual $H_2O_2$ content. The $H_2O_2$ in Solution 1 had a half life of about 20 minutes, indicating that the level of stabiliser used (100 ppm DTPMA acid equivalent) was insufficient to achieve the desirable minimum half life of 30 minutes. The $H_2O_2$ in Solutions 2 and 3 had half lives of 50 minutes and 38 minutes respectively. The result with Solution 3 indicated the exceptional stability of the concentrated hydrogen peroxide solutions of the invention. It is expected that a result similar to that obtained with Solution 2 would have been obtained using a freshly-prepared hydrogen peroxide solution of the invention.

**Claims**

1. A method for the preparation and/or maintenance of an alkaline bleaching bath, which comprises introducing hydrogen peroxide, an alkali metal salt of diethylenetriaminepenta(methylene phosphonic acid) (DTPMA) and an aqueous alkalinity control medium into the bath, characterised in that the hydrogen peroxide and the alkali metal salt of DTPMA are introduced as a solution of hydrogen peroxide containing at least 25% by weight of $H_2O_2$ and an alkali metal salt of DTPMA in a concentration such that the hydrogen peroxide in the bath has a half life of at least 30 minutes.

2. A solution of hydrogen peroxide containing at least 25% by weight $H_2O_2$ and, as a stabiliser, an alkali metal salt of DTPMA, characterised in that the concentration of the said alkali metal salt, expressed as the equivalent amount of DTPMA, is from 0.5 to 5% by weight of the solution, and the solution has a pH within the range 4-7.

3. A solution according to Claim 2 which contains 25-50% by weight $H_2O_2$, 1-2% by weight (expressed as DTPMA acid equivalent) of an alkali metal salt of DTPMA and which has a pH within the range 4.5-6.

4. A solution according to either of Claims 2 and 3 in which the alkali metal salt is a sodium salt.

4

5. A method according to Claim 1 in which the solution of hydrogen peroxide is a solution as claimed in any of Claims 2 to 4.

European Patent Office | EUROPEAN SEARCH REPORT | Application Number

EP 91 87 0052

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-9839 (UNILEVER)<br>* page 4, lines 6 - 10; claims 1, 4-6 *<br>* page 5, lines 5 - 9 *<br>--- | 2, 4 | C01B15/037<br>C11D3/39<br>D06L3/02 |
| X | EP-A-186990 (THE DOW CHEMICAL COMPANY)<br>* page 5, lines 11 - 26 *<br>* page 6, lines 23 - 26 *<br>* page 10, line 5 - page 13 * (Example 1, Run D)<br>--- | 1, 2, 4, 5 | |
| X | EP-A-351772 (HENKEL CO.)<br>* page 2, lines 33 - 40; claim 1 *<br>* page 3, lines 3 - 6 *<br>--- | 1, 2, 4, 5 | |
| A | FR-A-2643093 (MANUFACTURE DE PRODUITS CHIMIQUES PROTEX)<br>* claims 1-3 *<br>--- | 1 | |
| A | EP-A-347339 (ATOCHEM)<br>--- | | |
| A | US-A-4239643 (X. KOWALSKI)<br>------ | | |
| | | | TECHNICAL FIELDS SEARCHED (Int. Cl.5 ) |
| | | | C01B<br>C11D<br>D06L |

The present search report has been drawn up for all claims

| Place of search | Date of completion of the search | Examiner |
|---|---|---|
| THE HAGUE | 27 JUNE 1991 | VAN BELLINGEN I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P0401)